# EUROPÄISCHE PATENTSCHRIFT

(11) **EP 2 036 787 B1**
(45) Veröffentlichungstag und Bekanntmachung des Hinweises auf die Patenterteilung: **01.08.2012**
(21) Anmeldenummer: 08163917.1
(22) Anmeldetag: 09.09.2008
(51) Int. Cl.: B60R 21/34, F02M 35/02

(54) **Bauteil zum Einbau unter der Motorhaube eines Kraftfahrzeugs**
Component to be mounted under the bonnet of a motor vehicle
Composant destiné au montage sous le capot d'un véhicule automobile

(30) Priorität: 11.09.2007 DE 202007012689 U
(43) Veröffentlichungstag der Anmeldung: 18.03.2009
(73) Patentinhaber: MANN+HUMMEL GmbH, 71638 Ludwigsburg (DE)
(72) Erfinder: Spannbauer, Helmut, 71696, Möglingen (DE)

(56) Entgegenhaltungen:
- EP-A1- 1 426 237
- DE-A1-102004 007 284
- DE-A1-102004 054 274
- FR-A1- 2 879 538

## Beschreibung

### Technisches Gebiet

Die Erfindung bezieht sich auf ein Bauteil zum Einbau unter der Motorhaube eines Kraftfahrzeugs nach dem Oberbegriff des Anspruches 1.

### Stand der Technik

In der WO 2006/051072 A1 wird ein Luftfilter im Ansaugsystem einer Brennkraftmaschine beschrieben, der zur Verbesserung des Aufprallschutzes für Fußgänger ein nachgiebiges Gehäuse aufweist. Hintergrund ist das Bestreben, die Gefährdung für Personen zu reduzieren, die bei einem Unfall auf die Motorhaube des Fahrzeuges aufprallen. Die Unfallschwere kann durch Nachgiebigkeit der Motorhaube reduziert werden, was jedoch voraussetzt, dass unter der Motorhaube ein Freiraum vorhanden ist oder dass Bauteile, die unmittelbar unter der Motorhaube liegen, mit einer hohen Nachgiebigkeit ausgeführt sind.

Um diese Voraussetzungen zu schaffen, ist gemäß der WO 2006/051072 A1 das Luftfiltergehäuse zweiteilig mit einem Gehäuseunterteil und einem Gehäuseoberteil ausgeführt, die in der regulären Montageposition gegenseitig verrastet sind und einen Aufnahmeraum für die Aufnahme eines Luftfilterelementes begrenzen. Die Rastverbindung hält die Gehäuseteilen unter regulären Betriebsbedingungen in der Montageposition. Wird jedoch von oben eine die Rastkraft übersteigende Kraft auf das Gehäuseoberteil ausgeübt, was beispielsweise im Falle eines Aufpralles auf die Motorhaube geschieht, so wird die Rastverbindung gelöst und das Gehäuseoberteil wird teleskopartig in das Gehäuseunterteil eingeschoben.
Weiter ist aus der EP 1 426 237 A1 ein Bauteil, beispielsweise ein Luftfilter, zum Einbau in geringem Abstand unter der äußeren Karosseriehaut eines Kraftfahrzeuges im Fußgängeraufprallbereich bekannt, das mindestens einen zur Verformung bestimmten Abschnitt mit geringer mechanischer Festigkeit besitzt.

### Offenbarung der Erfindung

Von diesem Stand der Technik ausgehend liegt der Erfindung die Aufgabe zugrunde, mit einfachen konstruktiven Maßnahmen einen Luftfilter zu schaffen, der unter Gewährleistung eines guten Aufprallschutzes zum Einbau unter der Motorhaube eines Kraftfahrzeugs geeignet ist.

Diese Aufgabe wird erfindungsgemäß mit den Merkmalen des Anspruches 1 gelöst. Die Unteransprüche geben zweckmäßige Weiterbindungen an.

Der erfindungsgemäße Luftfilter, der zum Einbau unter der Motorhaube eines Kraftfahrzeugs vorgesehen ist, weist ein Gehäuse auf, bestehend aus einem ersten und einem zweiten Gehäuseteil, die über eine Klemmverbindung miteinander zu verbinden sind. Diese Klemmverbindung wird bei Einwirkung einer äußeren Kraft, die einen Grenzwert überschreitet, gelöst, so dass die Gehäuseteile teleskopartig ineinander verschoben werden.

Bei der Erfindung ist ein erstes Gehäuseteil zweiteilig aufgebaut und besteht aus einem Tragrahmen und einem Aufnahmeteil, wobei der Tragrahmen am zweiten Gehäuseteil abgestützt ist und das Aufnahmeteil und der Tragrahmen über die lösbare Klemmverbindung miteinander verbunden sind. Auf diese Weise kann gewährleistet werden, dass das teleskopartige Verschieben von Teilen des Gehäuses durch eine Relativbewegung zwischen dem Tragrahmen und dem Aufnahmeteil erfolgt, die beide Bestahlteil des ersten Gehäuseteils sind. Dadurch kann eine Aufgabenteilung realisiert werden, indem der Tragrahmen die Verbindung zum zweiten Gehäuseteil herstellt und das Aufnahmeteil die teleskopartige Verschiebung ermöglicht, die zur Verbesserung des Aufprallschutzes erforderlich ist. Aufgrund der Aufgaben- bzw. Funktionsteilung können Tragrahmen und Aufnahmeteil an ihre jeweilige Aufgabe optimal angepasst werden, was insbesondere mit einfachen, kostengünstigen Maßnahmen zu realisieren ist.

Erfindungsgemäß kann die Belastungsgrenze, bei deren Überschreitung die Bauteile übereinander geschoben werden, konstruktiv in einfacher Weise durch Maßnahmen eingestellt werden, die ausschließlich das Aufnahmeteil, jedoch nicht den Tragrahmen betreffen, beispielsweise durch Vorsehen eines Absatzes an der Wand des Aufnahmeteils, die unmittelbar an dem Tragrahmen anliegt. Dieser Absatz ist Teil einer Formschlussverbindung zwischen Tragrahmen und Aufnahmeteil, die unter Normalbedingungen ein teleskopartiges Zusammenschieben der Gehäuseteile verhindert. Erst bei Überschreitung der Belastungsgrenze können sich die Wandungen des Aufnahmeteils verformen und quer zur Verschieberichtung ausweichen, so dass der Absatz an der Wandung des Aufnahmeteils nicht länger am Tragrahmen abgestützt und die Formschlussverbindung aufgehoben wird, woraufhin das Aufnahmeteil relativ zum Tragrahmen verschoben werden kann.

Die Verbindung zwischen Tragrahmen und Aufnahmeteil ist erfindungsgemäß nicht als Sollbruchstelle, sondern als zerstörungsfreie Rast- oder Formschlussverbindung ausgeführt. Dies hat den Vorteil, dass auch nach einem teleskopartigen Zusammenschieben der Gehäuseteile das Bauteil wieder verwendbar ist. Das Lösen der Verbindung erfolgt vorteilhafterweise durch die Eigenelastizität des Aufnahmeteils, die es ermöglicht, dass mindestens eine Wandung des Aufnahmeteils bei Überschreiten der Belastungsgrenze quer zur Verschieberichtung ausweichen kann, wodurch die Verbindung aufgehoben wird. Grundsätzlich ist es aber auch möglich, dass diese Bewegungsmöglichkeit des Aufnahmeteils nicht durch Eigenelastizität, sondern durch einen mechanischen Freiheitsgrad erzielt wird, beispielsweise durch ein Gelenk im Aufnahmeteil. Außerdem ist es denkbar, dass zusätzlich oder alternativ zur Bewegungsmöglichkeit der Wandung des Aufnahmeteils auch ein Wandabschnitt des Tragrahmens entweder elastisch oder über einen mechanischen Freiheitsgrad ausweichen kann.

Erfindungsgemäß ist vorgesehen, dass das Aufnahmeteil hindemisfrei am zweiten Gehäuseteil entlang verschoben werden kann. Hierdurch ist sichergestellt, dass die Belastungsgrenze ausschließlich über die Verbindung zwischen dem Aufnahmeteil und dem Tragrahmen eingestellt wird, so dass die Verbindung zwischen diesen Einzelteilen des Bauteils für die Höhe der Verbindungskraft verantwortlich ist. Dem zweiten Gehäuseteil kommt dagegen nur eine tragende Funktion für die Einzelteile des ersten Gehäuseteils zu, ohne für die Einstellung der Belastungsgrenze verantwortlich zu sein. Vielmehr kann das Aufnahmeteil gegenüber dem zweiten Gehäuseteil verschoben werden, sobald die Belastungsgrenze zwischen Aufnahmeteil und Tragrahmen überschritten worden ist.

In zweckmäßiger weiterer Ausbildung ist das Aufnahmeteil wannenförmig ausgebildet, wobei der Tragrahmen mindestens eine Seitenwand des Aufnahmeteils abstützt. Erfindungsgemäß ist der Tragrahmen ringförmig ausgeführt und umschließt das Aufnahmeteil, wodurch das Aufnahmeteil in Radialrichtung allseitig am Tragrahmen anliegt. Die Verbindungselemente zwischen den Seitenwänden des Aufnahmeteils und dem Tragrahmen müssen sich dagegen nicht zwangsläufig über den gesamten Umfang erstrecken; es genügt vielmehr, dass zumindest zwei über den Umfang verteilte, derartige Verbindungselemente zwischen Tragrahmen und Seitenwänden des Aufnahmeteils vorgesehen sind. Gleichwohl kann es aber zweckmäßig sein, auch ringförmig umlaufende Verbindungselemente vorzusehen, beispielsweise einen Absatz an der Aufnahmeteilwandung, der an der Stirnseite des Tragrahmens anliegt.

Gemäß einer weiteren vorteilhaften Ausführung hintergreift die freie Stirnseite des Aufnahmeteils den Tragrahmen formschlüssig. Dadurch ist das Aufnahmeteil vom Tragrahmen sicher festgeklemmt, so dass ein unbeabsichtigtes Lösen des Aufnahmeteils vom zweiten Gehäuseteil - in Gegenrichtung zum teleskopartigen Ineinanderschieben - ausgeschlossen ist. Der Tragrahmen kann mit dem zweiten Gehäuseteil fest verbunden werden, beispielsweise durch Verschrauben oder Verschweißen oder Verklipsen oder dergleichen.

Um die Dichtfunktion zwischen den Gehäuseteilen sicherzustellen und das von den Gehäuseteilen eingeschlossene Innere von der Umgebung abzudichten, ist ein Dichtelement zwischen Tragrahmen und zweitem Gehäuseteil vorgesehen. Dieses Dichtelement ist insbesondere in einen umlaufenden Absatz eingesetzt, der im Bereich der freien Stirnseite des zweiten Gehäuseteils gebildet und von mindestens einer Seite des Tragrahmens begrenzt ist, so dass der Absatz die Form einer Ringnut aufweist, die vorteilhafterweise zum Gehäuseinneren hin geöffnet ist. Auf diese Weise ist es möglich, den Dichtring an einem Funktionselement anzuordnen, das im Gehäuseinneren platziert ist, beispielsweise an einem Luftfilterelement.

### Kurze Beschreibung der Zeichnungen

Weitere Vorteile und zweckmäßige Ausführungen sind den weiteren Ansprüchen, der Figurenbeschreibung und den Zeichnungen zu entnehmen. Es zeigen:

Fig. 1 einen Schnitt durch einen Luftfilter für eine Brennkraftmaschine, der unter der Motorhaube eines Kraftfahrzeugs eingebaut ist, wobei zwischen Motorhaube und Gehäuseoberteil des Luftfilters ein Freiraum als Aufprallschutz gegeben ist, der durch axiales Verschieben des Gehäuseoberteils relativ zum Gehäuseunterteil des Luftfilters vergrößert werden kann,

Fig. 2 der Luftfilter mit teleskopartig ineinandergeschobenem Gehäuseoberteil relativ zum Gehäuseunterteil, wobei das Gehäuseoberteil aus einem wannenförmigen bzw. deckelförmigen Aufnahmeteil und einem ringförmig einfassenden Tragrahmen besteht und das Aufnahmeteil gegenüber dem fest angeordneten Tragrahmen axial zu verschieben ist,

Fig. 3a bis 3c verschiedene Ausführungsvarianten der Verbindung zwischen der Seitenwand des Aufnahmeteils und dem Tragrahmen,

Fig. 4 eine Seitenansicht des Luftfiltergehäuses mit verschiedenen Positionen der Verbindungsteile zwischen Tragrahmen und Aufnahmeteil,

Fig. 5 eine weitere Ausführungsvariante mit einem Dichtring zwischen Tragrahmen und Aufnahmeteil,

Fig. 6 eine weitere Ausführungsvariante eines Luftfilters, dessen Aufnahmeteil aus Hartschaum gefertigt ist, wobei die Verbindung zwischen Tragrahmen und Außenwand des Aufnahmeteils in noch einer weiteren Ausführung dargestellt ist.

In den Figuren sind gleiche Bauteile mit gleichen Bezugszeichen versehen.

### Ausführungsformen der Erfindung

In den Ausführungsbeispielen ist ein Luftfilter zum Einbau in das Ansaugsystem einer Brennkraftmaschine dargestellt. Nicht erfindungsgemäß ist eine Anwendung auf sonstige Bauteile, die unmittelbar unter der Motorhaube eines Kraftfahrzeuges angeordnet sind, beispielsweise auf Ansaugleitungen des Ansaugsystems.

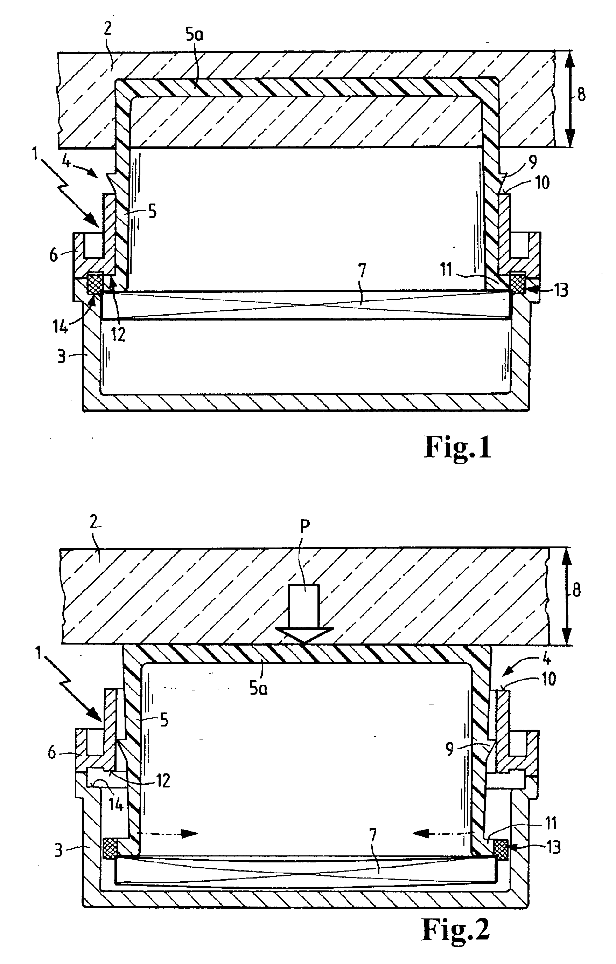

Der in Fig. 1 dargestellte Luftfilter 1 ist unter der Motorhaube 2 eines Kraftfahrzeuges angeordnet und besteht aus einem Gehäuseunterteil 3 und einem Gehäuseoberteil 4, die einen Aufnahmeraum begrenzen, in welchem ein Luftfilterelement 7 angeordnet ist. Das Gehäuseoberteil 4 ist zweiteilig aufgebaut und besteht aus einem wannen- bzw. haubenförmigen Aufnahmeteil 5 und einem die Seitenwände des Aufnahmeteils 5 ringförmig umschließenden Tragrahmen 6.

Unmittelbar unterhalb der Motorhaube 2 ist aus Gründen eines verbesserten Aufprallschutzes ein Sollfreiraum vorgesehen, der mit dem Pfeil 8 markiert ist. Die Oberseite 5a des Aufnahmeteils 5 ragt in diesen Sollfreiraum 8 ein, was jedoch nur zulässig ist, wenn das Aufnahmeteil 5 im Falle eines Aufpralls aus dem Sollfreiraum 8 heraus geschoben wird. Um dies realisieren zu können, kann das Aufnahmeteil 5 teleskopartig in das umgreifende Gehäuseunterteil 3 hinein verschoben werden, was in Fig. 2 dargestellt ist, so dass der Sollfreiraum 8 unter der Motorhaube 2 nach einem Aufprall auf die Außenseite der Motorhaube frei von Teilen des Luftfilter 1 ist.

Das teleskopartige Verschieben des Aufnahmeteils 5 relativ zum Tragrahmen 6 und Gehäuseunterteil 3 erfolgt nur bei Überschreiten einer Belastungsgrenze. Diese wird mittels einer Rastverbindung zwischen der Außenseite der Seitenwand des Aufnahmeteils 5 und dem Tragrahmen 6 eingestellt, wofür an der Außenseite der Seitenwand des Aufnahmeteils ein überstehender, im Querschnitt dreieckförmiger Absatz 9 angeformt ist, der in der regulären Betriebsposition des Luftfilters (Fig. 1) an der zugeordneten Stirnseite 10 des Tragrahmens 6 anliegt. Aufgrund der Dreiecks- bzw. Keilform des Absatzes 9 und wegen der Eigenelastizität der Wandungen des Aufnahmeteils 5 können die Wandungen bei einer axialen, von oben wirkenden Kraft p in Querrichtung nach innen ausweichen, so dass die Rastverbindung zwischen dem Absatz 9 und dem Tragrahmen 6 aufgehoben wird und das Aufnahmeteil 5, wie in Fig. 2 dargestellt, mit dem Absatz 9 an der Innenseite des Tragrahmens 6 anliegend nach unten in Richtung des Gehäuseunterteils 3 verschoben werden kann.

Im Bereich der freien, dem Gehäuseunterteil zugewandten Stirnseite weist das Aufnahmeteil 5 einen radial nach außen umgebogenen Kragen 11 auf, der in der Betriebsposition nach Fig. 1 die zugewandte Stirnseite 12 des Tragrahmens 6 untergreift. Auf diese Weise ist das Aufnahmeteil 5 gegen ein versehentliches Lösen vom Luftfilter gesichert. Dieser Kragen 11 liegt zugleich auf der Oberseite des Luftfilterelementes 7 auf, welches bei dem axialen Verschieben des Aufnahmeteils 5 in Richtung des Gehäuseunterteils 3 (Fig. 2) gemeinsam mit dem Aufnahmeteil 5 bewegt wird.

Um die Bewegungsmöglichkeit des Luftfilterelementes 7 einerseits im Falle eines Aufpralles zu ermöglichen und andererseits das Luftfilterelement in der regulären Betriebsposition in einer vorbestimmten Stellung innerhalb des Aufnahmeraums im Luftfilter zu halten, ist am Luftfilterelement 7 ein ringförmig umlaufendes Dichtungselement 13 angeordnet, welches im Bereich der radial außen liegenden Seite des Luftfilterelementes 7 platziert ist. Dieses Dichtungselement 13 liegt auf einem umlaufenden, gehäuseseitigen Absatz 14 auf, der benachbart zur freien Stirnseite des Gehäuseunterteils 3 gebildet ist. Auf die Stirnseite des Gehäuseunterteils 3 ist außerdem der Tragrahmen 6 aufgesetzt, der vorzugsweise mit dem Gehäuseunterteil 3 fest verbunden, beispielsweise verschweißt oder verschraubt ist. Der Absatz 14 wird von dem Tragrahmen 6 zu einer ringförmigen Nut ergänzt, in die das Dichtungselement 18 eingesetzt wird (Fig. 1). Der Kragen 11 an der Stirnseite des Aufnahmeteils schließt das Dichtungselement 13 in dieser Nut ein. Aufgrund der Elastizität des Dichtungselementes 13 kann aber im Falle eines Aufpralls auf die Motorhaube 2 das Dichtungselement 13 aus der Nut entweichen, so dass das Filterelement 7 gemeinsam mit dem Aufnahmeteil 5 in Richtung des Bodens des Gehäuseunterteils 3 verschoben werden kann.

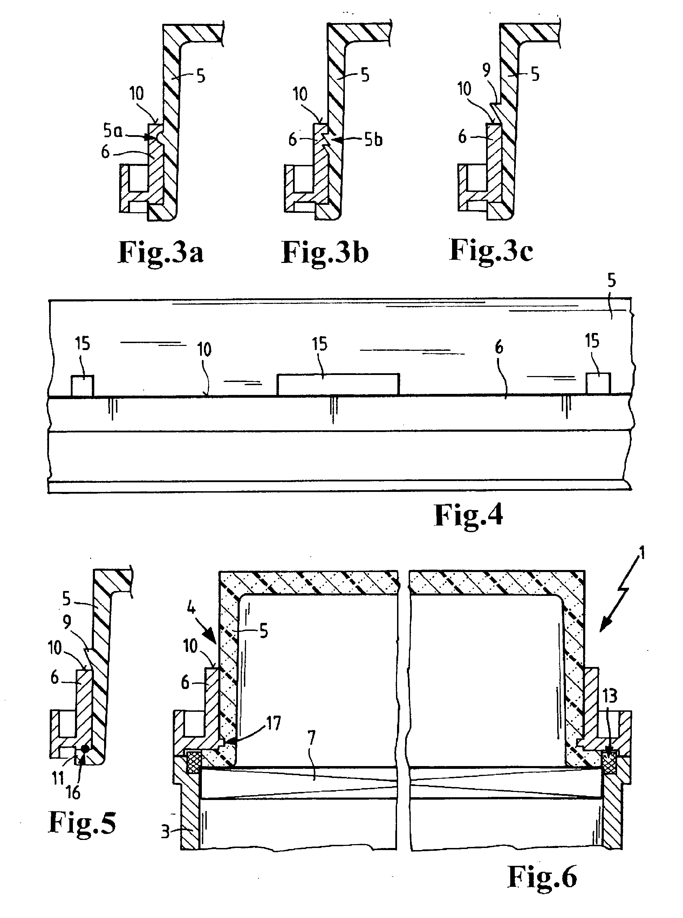

In den Figuren 3a bis 3c sind verschiedene Varianten für eine Rast- bzw. Formschlussverbindung zwischen der Außenseite der Wandung des Aufnahmeteils 5 und dem Tragrahmen 6 dargestellt. Gemäß Fig. 3a ist an der Außenseite der Wandung des Aufnahmeteils 5 eine noppenförmige Erhebung 5a angeformt, die in eine korrespondierende Ausnehmung an der Innenseite des Tragrahmens 6 einragt. Aufgrund der teilkugeligen Oberfläche des Noppens 5a kann dieser bei Beaufschlagung des Aufnahmeteils 5 mit einer Verschiebekraft aus der zugeordneten Ausnehmung im Tragrahmen 6 heraus gehoben werden.

In Fig. 3b ist die Verbindung zwischen Aufnahmeteil 5 und Tragrahmen 6 als dreieck- bzw. keilförmige, über die Außenwand des Aufnahmeteils 5 überstehende und an diese angeformte Erhebungen 5b ausgeführt, die in eine korrespondierende Ausnehmung an der Innenseite des Tragrahmens 6 einragt. Zweckmäßigerweise sind in Achsrichtung gesehen zwei unmittelbar hintereinander angeordnete derartige Erhebungen vorgesehen, wobei die Keilform der Erhebungen das axiale Verschieben des Aufnahmeteils 5 im Falle einer Belastung von oben erleichtert.

Das Ausführungsbeispiels aus Fig. 3c entspricht demjenigen aus den Figuren 1 und 2 und umfasst einen Keil bzw. Absatz 9 an der Außenseite des Aufnahmeteils 5, der in regulärer Position an der freien Stirnseite 10 des Tragrahmens 6 anliegt.

Wie der Seitenansicht nach Fig. 4 zu entnehmen, können über den Umfang verteilt mehrere Verbindungen 15 zwischen dem Aufnahmeteil 5 und dem Tragrahmen 6 vorgesehen sein. Diese Verbindungen 15, die jeweils beispielhaft gemäß den Ausführungen nach den Figuren 3a bis 3c ausgebildet sind, können in Umfangsrichtung eine unterschiedliche Länge aufweisen.

Wie in Fig. 5 dargestellt, kann zwischen dem Kragen 11 im Bereich der Stirnseite des Aufnahmeelementes 5 und der zugewandten Stirnseite des Tragrahmens 6 ein Dichtring 16 eingesetzt sein, um eine sichere Abdichtung des Filterinnenraums von der Umgebung zu erreichen.

In Fig. 6 ist ein weiteres Ausführungsbeispiel eines Luftfilters 1 dargestellt, dessen Gehäuseoberteil ebenso wie im vorhergehenden Ausführungsbeispiel nach den Figuren 1 und 2 aus einem haubenförmigen Aufnahmeteil 5 und einem Tragrahmen 6 besteht. Allerdings ist das Aufnahmeteil 5 aus einem Hartschaum gefertigt, wohingegen in den vorangegangenen Ausführungsbeispielen das Aufnahmeteil 5 aus einem Kunststoff, insbesondere einen Spritzgusskunststoff hergestellt ist. Da der Hartschaum eine geringere Eigenelastizität aufweist, ist die Rast- bzw. Formschlussverbindung zwischen der Außenseite des Aufnahmeteils 5 und der Innenseite des Tragrahmens 6 nur verhältnismäßig schwach ausgeprägt. Hierzu weist ein kleiner vorstehender Zapfen 17 an der Innenwand des Tragrahmens 6 in eine korrespondierende Ausnehmung in der Außenseite des Aufnahmeteils 5 ein.

## Patentansprüche

1. Luftfilter (1) für ein Ansaugsystem für eine Brennkraftmaschine unter der Motorhaube eines Kraftfahrzeugs, mit einem Gehäuse, bestehend aus einem ersten und einem zweiten Gehäuseteil (3, 4), die miteinander zu verbinden sind, wobei in den von den Gehäuseteilen (3, 4) begrenzten Innenraum ein Filterelement (7) eingesetzt ist, wobei die Verbindung bei Einwirkung einer äußeren Kraft auf ein Gehäuseteil (4) zu lösen und die Gehäuseteile (3, 4) teleskopartig ineinander zu verschieben sind, wobei ein erstes Gehäuseteil (4) zweiteilig aufgebaut ist und aus einem Tragrahmen (6) und einem Aufnahmeteil (5) besteht, wobei der Tragrahmen (6) am zweiten Gehäuseteil (3) abgestützt ist und das Aufnahmeteil (5) und der Tragrahmen (6) über die lösbare Verbindung aneinander gehalten sind und das Aufnahmeteil (5) hindemisfrei am zweiten Gehäuseteil (3) entlang verschoben werden kann, wobei der Tragrahmen (6) das Aufnahmeteil (5) ringförmig umschließt, **dadurch gekennzeichnet, dass** die Verbindung als Rastverbindung ausgebildet ist.

2. Luftfilter nach Anspruch 1, **dadurch gekennzeichnet, dass** das Aufnahmeteil (5) wannenförmig ausgebildet ist, wobei die Verbindung zwischen den Seitenwänden des Aufnahmeteils (5) und dem Tragrahmen (6) angeordnet ist.

3. Luftfilter nach einem der Ansprüche 1 bis 2, **dadurch gekennzeichnet, dass** an der Stirnseite des Aufnahmeteils (5) ein Kragen (11) angeformt ist, der den Tragrahmen (6) formschlüssig hintergreift.

4. Luftfilter nach einem der Ansprüche 1 bis 3, **dadurch gekennzeichnet, dass** zwischen Tragrahmen (6) und zweitem Gehäuseteil (3) ein Dichtelement (13) eingesetzt ist.

5. Luftfilter nach Anspruch 4, **dadurch gekennzeichnet, dass** im Bereich der freien Stirnseite des zweiten Gehäuseteils (3) ein umlaufender Absatz (14) zur Aufnahme des Dichtelements (13) gebildet ist, der an mindestens einer Seite vom Tragrahmen (6) begrenzt ist.

6. Luftfilter nach einem der Ansprüche 1 bis 5, **dadurch gekennzeichnet, dass** eine Wandung eines an der Verbindung beteiligten Teils quer zur Verschieberichtung verformbar ausgeführt ist.

7. Luftfilter nach Anspruch 6, **dadurch gekennzeichnet, dass** eine Wandung des Aufnahmeteils (5) verformbar ausgebildet ist.

8. Luftfilter nach Anspruch 4 oder 5, **dadurch gekennzeichnet, dass** das Dichtelement (13) am Filterelement (7) angeordnet ist.

## Claims

1. Air filter (1) for an intake system for an internal combustion engine under the engine hood of a motor vehicle, with a housing, consisting of a first and a second housing component (3, 4) which are to be connected with each other, wherein a filter element (7) is inserted into the interior area defined by the housing components (3, 4), wherein the connection can be detached when an external force has an impact on one housing component (4) and the housing components (3, 4) can be slid into each other telescopically, wherein a first housing component (4) is made in two parts and consists of a support frame (6) and a receiving part (5), wherein the support frame (6) is supported at the second housing component (3) and the receiving part (5) and the support frame (6) are kept together by a detachable connection and the receiving part (5) can be slid unobstructedly along the second housing component (3), wherein the support frame (6) encloses the receiving part (5) annularly, **characterized in that** the connection is designed as snap-in connection.

2. Air filter according to claim 1, **characterized in that** the receiving part (5) has a trough-shaped design, wherein the connection is disposed between the sidewalls of the receiving part (5) and the support frame (6).

3. Air filter according to one of the claims 1 to 2, **characterized in that** a collar (11) which engages the support frame (6) positively behind is integrally molded at the end face of the receiving part (5).

4. Air filter according to one of the claims 1 to 3, **characterized in that** a sealing element (13) is inserted between the support frame (6) and the second housing component (3).

5. Air filter according to claim 4, **characterized in that** a circumferential support (14) for receiving the sealing element (13) and which is delimited at at least one side of the support frame (6) is formed in the area of the free end face of the second housing component (3).

6. Air filter according to one of the claims 1 to 5, **characterized in that** a wall of a part involved in the connection is designed deformably transversally to the shifting direction.

7. Air filter according to claim 6, **characterized in that** a wall of the receiving part (5) is designed deformably.

8. Air filter according to claim 4 or 5, **characterized in that** the sealing element (13) is disposed at the filter element (7).

## Revendications

1. Filtre à air (1) pour un système d'aspiration pour un moteur à combustion interne placé en dessous du capot d'un véhicule automobile, avec un boîtier composé d'une première partie et d'une deuxième partie de boîtier (3, 4) qui peuvent être reliées l'une à l'autre, un élément filtrant (7) étant inséré dans l'espace intérieur limité par les parties de boîtier (3, 4), l'assemblage pouvant être détaché lorsqu'une force extérieure est exercée sur une partie de boîtier (4) et les parties de boîtier (3, 4) pouvant être décalées de manière télescopique l'une dans l'autre, une première partie de boîtier (4) étant formée de deux éléments et constituée d'un cadre porteur (6) et d'un élément de réception (5), le cadre porteur (6) étant en appui sur la deuxième partie de boîtier (3) et l'élément de réception (5) et le cadre porteur (6) étant maintenus ensemble au moyen de l'assemblage détachable et l'élément de réception (5) pouvant être déplacé sans obstacle le long de la deuxième partie de boîtier (3), le cadre porteur (6) encerclant l'élément de réception (5), **caractérisé en ce que** l'assemblage est réalisé en tant que raccord encliquetable.

2. Filtre à air selon la revendication 1, **caractérisé en ce que** l'élément de réception (5) est réalisé en forme de cuvette, l'assemblage étant disposé entre les parois latérales de l'élément de réception (5) et le cadre porteur (6).

3. Filtre à air selon l'une des revendications 1 à 2, **caractérisé en ce qu'**un collet (11) qui est en prise de manière crabotée avec le cadre porteur (6) est formé sur la face frontale de l'élément de réception (5).

4. Filtre à air selon l'une des revendications 1 à 3, **caractérisé en ce qu'**un élément d'étanchéité (13) est placé entre le cadre porteur (6) et la deuxième partie de boîtier (3).

5. Filtre à air selon la revendication 4, **caractérisé en ce qu'**un épaulement (14) circulaire destiné à réceptionner l'élément d'étanchéité (13) et limité, au moins d'un côté, par le cadre porteur (6) est formé à proximité de la face frontale libre de la deuxième partie de boîtier (3).

6. Filtre à air selon l'une des revendications 1 à 5, **caractérisé en ce qu'**une paroi d'une partie intervenant dans l'assemblage est réalisée de manière déformable en travers du sens de décalage.

7. Filtre à air selon la revendication 6, **caractérisé en ce qu'**une paroi de l'élément de réception (5) est réalisée de manière déformable.

8. Filtre à air selon la revendication 4 ou 5, **caractérisé en ce que** l'élément d'étanchéité (13) est disposé sur l'élément filtrant (7).
